# EUROPÄISCHE PATENTSCHRIFT

(11) **EP 4 298 047 B1**
(45) Veröffentlichungstag und Bekanntmachung des Hinweises auf die Patenterteilung: **29.04.2026**
(21) Anmeldenummer: 22706229.6
(22) Anmeldetag: 11.02.2022
(51) Int. Cl.: B66C 23/44, B66C 23/90, G01M 13/04, B66C 15/00, B66C 23/68, B66C 23/36, B66C 23/00, B66C 23/88, G06Q 10/20

(54) **VERFAHREN ZUR BESTIMMUNG EINER LAGERREIBUNG**
METHOD FOR DETERMINING A BEARING FRICTION
PROCÉDÉ DE DÉTERMINATION D'UN FROTTEMENT DE PALIER

(30) Priorität: 23.02.2021 AT 5002921 U
(43) Veröffentlichungstag der Anmeldung: 03.01.2024
(73) Patentinhaber: Palfinger AG, 5101 Bergheim bei Salzburg (AT)
(72) Erfinder: RAUCHENSCHWANDTNER, Hannes, 4891 Pöndorf (AT)
(74) Vertreter: Torggler & Hofmann Patentanwälte - Innsbruck
(86) Internationale Anmeldenummer: PCT/AT2022/060042
(87) Internationale Veröffentlichungsnummer: WO 2022/178561

(56) Entgegenhaltungen:
- EP-A1- 2 947 035
- WO-A1-2018/068071
- DE-A1- 102018 216 718
- US-A1- 2019 031 474

## Beschreibung

Die Erfindung betrifft ein Verfahren zur Bestimmung einer Lagerreibung in einem Armsystem eines Kranarms Weiter betrifft die Erfindung ein Computerprogrammprodukt zur Ausführung eines solchen Verfahrens, eine Steuerung zur Durchführung eines solchen Verfahrens und einen Kran mit einer solchen Steuerung.

Im Stand der Technik ist bekannt, dass an Lagerstellen von Kranarmen Verschleißerscheinungen auftreten. Um eine Betriebssicherheit zu gewährleisten, werden Lagerstellen präventiv gewartet oder erneuert, wobei dies oft unnötig früh vor dem tatsächlichen Auftreten von Verschleißerscheinungen erfolgt. Andererseits wird ein Auftreten von Verschleißerscheinungen oft zu spät erkannt, was zu Schäden am Kranarm, einer deutlichen Verschlechterung der Leistungsfähigkeit oder einem ungeplanten Ausfall führen kann.

Die WO 2018/068071 A1 offenbart ein Armsystem eines Kranes und ein Verfahren zur Bestimmung der angehobenen Last. Aus der US 2019/031474 A1 sind Verfahren und Vorrichtungen zur Überwachung von Betriebsparametern von Hebevorrichtungen bekannt, insbesondere zur Überwachung der Lagerreibung von Seilscheiben.

Aufgabe der Erfindung ist ein Vermeiden der oben genannten Problematik mit Lagerstellen von Kranarmen. Insbesondere sollen Wartungsintervalle richtig bemessbar werden und sich Schäden vorhersagen und ggf. lokalisieren lassen können.

Die Aufgabe wird von einem Verfahren gemäß Anspruch 1, einem Computerprogrammprodukt zur Ausführung eines solchen Verfahrens, einer Steuerung mit einer Recheneinheit, welche zur Durchführung eines solchen Verfahrens ausgebildet ist, und einem Kran mit einer solchen Steuerung gelöst.

Vorteilhafte Ausführungen sind in den abhängigen Ansprüchen definiert.

Das Verfahren dient der Bestimmung einer Lagerreibung in zumindest einer Lagerstelle eines Armsystems eines Kranarms.

Eine Bestimmung der Lagerreibung kann eine qualitative und/oder quantitative Erfassung einer Lagerreibung umfassen.

Eine Lagerreibung kann auf eine einzelne Lagerstelle oder auf mehrere Lagerstellen eines Armsystems bezogen sein.

Der Kranarm kann zumindest einen ersten Kranarm und einen zweiten Kranarm aufweisen, wobei der zweite Kranarm zumindest abschnittsweise in dem ersten Kranarm über zumindest eine Lagerstelle verschiebbar gelagert ist und/oder der zweite Kranarm an dem ersten Kranarm über zumindest eine Lagerstelle gelenkig gelagert ist.

Es soll nicht ausgeschlossen sein, dass der Kranarm mehrere gelenkig miteinander verbundene Kranarme aufweist.

In einer Ausführung kann der Kranarm als Kranarme zumindest eine Kransäule, einen gelenkig an dieser gelagerten Hubarm und einen gelenkig an diesem gelagerten Knickarm aufweisen. Der Knickarm kann längenveränderbar mit zueinander verschiebbaren Ausschüben ausgebildet sein. Am Knickarm kann ein weiterer Kranarm, etwa in Form eines weiteren Knickarms, gelenkig angeordnet sein. Es soll nicht ausgeschlossen sein, dass der Hubarm zueinander verschiebbare Ausschübe aufweist.

Allgemein können der zumindest einen erste Kranarm und der zumindest eine zweite Kranarm gelenkig miteinander über eine Lagerstelle verbunden sein.

Das Armsystem weist zumindest einen Antrieb für den zumindest ersten und zweiten Kranarm auf.

Beim Aktivieren des zumindest einen Antriebs des Armsystems kann allgemein eine Relativbewegung zwischen dem zumindest einen ersten und zweiten Kranarm hervorgerufen werden. Insbesondere kann eine solche Bewegung aktiv angetrieben werden. Es ist auch denkbar, dass eine Bewegung durch die Aktivierung zugelassen wird, wobei dabei der Antrieb beispielweise durch Einwirken der Schwerkraft erfolgen kann.

Ein Aktivieren des zumindest einen Antriebs kann allgemein eine Steuerung des Armsystems des Kranarms durch einen Benutzer durch Abgabe von Steuerbefehlen an den oder die Antriebe umfassen. Ein autonomes Steuern des Armsystems des Kranarms durch etwa eine dazu ausgebildete Recheneinheit ist ebenso denkbar.

In einem ersten Erfassungs-Verfahrensschritt der Verfahrens kann eine Erfassung von zumindest einem ersten Wert, der für eine Lagerreibung der zumindest einen Lagerstelle bei einem ersten Aktivieren - insbesondere währen dem ersten Aktivieren - des zumindest einen Antriebs des Armsystems zur Bewegung zumindest des zweiten Kranarms relativ zum ersten Kranarm charakteristisch ist, erfolgen.

Eine Erfassung eines Werts kann für das Verfahren allgemein
- ein Auslesen eines Werts aus einem Speicher, vorzugsweise aus einem mit einer zum Durchführen des Verfahrens ausgebildeten Recheneinheit kommunizierenden Speicher, und/oder
- das Hinterlegen eines Werts in einen solchen Speicher, vorzugsweise über eine Benutzerschnittstelle, und/oder
- die messtechnische Erfassung eines Werts
umfassen.

Der im ersten Erfassungs-Verfahrensschritt erfasste erste Wert kann allgemein für eine Lagerreibung, die bei Bewegung zumindest des zweiten Kranarms relativ zum ersten Kranarm auftreten kann oder auftritt, charakteristisch sein.

Der im ersten Erfassungs-Verfahrensschritt erfasste erste Wert kann ein charakteristischer Richtwert oder Bezugswert für eine Lagerreibung sein.

Der im ersten Erfassungs-Verfahrensschritt erfasste erste Wert kann beispielsweise ein realer Wert - wie etwa ein Messwert - oder ein angenommener Wert - wie etwa ein aus einer Tabelle oder Simulation oder Berechnung stammender Wert - sein.

Der erste Erfassungs-Verfahrensschritt kann allgemein der Ausgangspunkt für eine Messreihe aus mehreren Messungen sein.

In einem Antriebs-Verfahrensschritt des Verfahrens kann ein zweites Aktivieren des zumindest einen Antriebs des Armsystems erfolgen, bei welchem eine Bewegung zumindest des zweiten Kranarms relativ zum ersten Kranarm erfolgt.

Bei der durch das zweite Aktivieren hervorgerufenen Relativbewegung zumindest des zweiten Kranarms relativ zum ersten Kranarm tritt an und/oder in der zumindest einen Lagerstelle eine Lagerreibung auf.

In einem zweiten Erfassungs-Verfahrensschritt des Verfahrens kann während der zweiten Aktivierung des zumindest einen Antriebs eine Erfassung von zumindest einem zweiten Wert, der ein für eine Lagerreibung der zumindest einen Lagerstelle charakteristischer Messwert ist, erfolgen.

Eine messtechnische Erfassung des ersten Werts und/oder des zweiten Wert kann über geeignete Sensoren erfolgen.

Allgemein können der erste und/oder der zweite Wert einzelne Werte oder Mengen, insbesondere nach einer zeitlichen oder räumlichen Ordnungsrelation geordnete Mengen, an Werten sein. Insbesondere können die Werte oder Mengen nach Zeit, Winkel oder Weg geordnet sein.

Im zweiten Erfassungs-Verfahrensschritt kann vorgesehen sein, dass während der durch das zweite Aktivieren hervorgerufenen Relativbewegung zumindest des zweiten Kranarms relativ zum ersten Kranarm eine Erfassung eines für die auftretende Lagerreibung charakteristischen zweiten Werts in Form eines Messwerts erfolgt.

Es kann vorgesehen sein, dass das Verfahren weitere, analog gestaltete Verfahrensschritte mit Aktivierungen und bei und/oder während diesen Aktivierungen stattfindenden Erfassungen von für die Lagerreibung charakteristischen Werten, insbesondere Messwerten, umfasst.

Die weiteren Verfahrensschritte können weitere Teile einer Messreihe sein.

In einem Auswert-Verfahrensschritt des Verfahrens kann durch eine Auswertung des zumindest einen ersten Werts und des zumindest einen während der zweiten Aktivierung des Antriebs erfassten zweiten Werts eine Charakterisierung der Lagerreibung der zumindest einen Lagerstelle erfolgen.

Die Auswertung kann grundsätzlich einen Vergleich des zumindest einen ersten Werts und des zumindest einen zweiten Werts umfassen.

Eine Charakterisierung der Lagerreibung kann eine qualitative und/oder quantitative Bestimmung der Lagerreibung der zumindest einen Lagerstelle umfassen.

Die Auswertung kann Berechnungen unter Einbeziehung zumindest des ersten und des zweiten Werts umfassen.

Allgemein kann die Auswertung einzelne Werte oder Mengen, insbesondere nach einer zeitlichen oder räumlichen Ordnungsrelation geordnete Mengen, von für die Lagerreibung charakteristischen Werten sein. Insbesondere können diese Werte oder Mengen nach Zeit, Winkel oder Weg geordnet sein.

Die Auswertung kann die in weiteren, analog gestalteten Verfahrensschritten erfassten Werte umfassen.

Die Auswertung kann beispielsweise durch eine zum Durchführen des Verfahrens ausgebildete Recheneinheit erfolgen.

Im ersten Erfassungs-Verfahrensschritt kann in einer Ausführung ein erstes Aktivieren des zumindest einen Antriebs des Armsystems erfolgen, bei welchem eine Bewegung zumindest des zweiten Kranarms relativ zum ersten Kranarm erfolgt. Dabei kann während der ersten Aktivierung des Antriebs eine Erfassung des zumindest einen ersten Werts in Form zumindest eines für eine Lagerreibung der zumindest einen Lagerstelle charakteristischen Messwerts erfolgen. Eine solche Erfassung kann beispielsweise während dem regulären Betrieb des Kranarms erfolgen.

Alternativ oder ergänzend kann in einer Ausführung
- eine Erfassung des zumindest einen ersten Werts in Form zumindest eines aus einer Simulation gewonnenen Werts erfolgen, und/oder
- eine Erfassung des zumindest einen ersten Werts in Form zumindest eines empirisch gewonnenen Werts erfolgen, und/oder
- eine Erfassung des zumindest einen ersten Werts in Form eines nominellen Werts
erfolgen.

In einer solchen Ausführung kann im ersten Erfassung-Verfahrensschritt eine Erfassung des ersten Werts ohne eine tatsächlich stattfindende erste Aktivierung des zumindest einen Antriebs des Armsystems erfolgen, wenn der erfasste erste Wert charakteristisch für eine bei einer solchen angenommenen ersten Aktivierung auftretenden Lagerreibung ist. Eine solche Erfassung kann beispielsweise beim Hersteller oder Aufbauer des Kranarms erfolgen, wenn der Kranarm spezifiziert wird.

Bei einem ersten Wert in Form zumindest eines aus einer Simulation gewonnenen Werts kann es sich um einen rechnerisch gewonnenen Sollwert handeln.

Bei einem ersten Wert in Form zumindest eines empirisch gewonnenen Werts kann es sich allgemein um einen Messwert handeln. Ein solcher empirischer Wert kann beispielsweise aus einer Messung an einer baugleichen Lagerstelle oder einem baugleichen Kranarm stammen.

Bei einem ersten Wert in Form eines nominellen Werts kann es sich um einen vorgegebenen Wert handeln. Dieser kann beispielsweise einer Tabelle entnommen sein.

In einer Ausführung kann der Auswert-Verfahrensschritt einen Berechnungs-Verfahrensschritt umfassen, in welchem aus dem zumindest einen ersten und dem zumindest einen zweiten Wert zumindest eine erste und eine zweite Kennzahl der Lagerreibung errechnet wird.

Eine Kennzahl der Lagerreibung kann eine quantitative Größe - gegebenenfalls mit einer Maßeinheit - sein, welche einen direkten Vergleich der ausgewerteten Lagerreibungen zulassen kann.

Eine Kennzahl der Lagerreibung kann unabhängig von der Erfassung des ersten und/oder zweiten Werts eine Charakterisierung der Lagerreibung erlauben. Dabei kann unabhängig von beispielsweise dem Winkelbereich und/oder der Wegstrecke der zumindest einen Lagerstelle, über den oder die der erste und/oder der zweite Wert erfasst wird, eine Kennzahl berechnet werden.

Vorzugsweise werden als Kennzahlen zumindest ein erster und ein zweiter Reibwert berechnet. Über den Reibwert, auch Reibungskoeffizient oder Reibungszahl genannt, kann als Verhältnis der Reibungskraft in der Lagerstelle zur Anpresskraft in der Lagerstelle eine Charakterisierung der Lagerreibung erfolgen.

Anpresskräfte in der Lagerstelle können sich beispielsweise bei bekannter Masse und Schwerpunktslage der Kranarme, sowie der Erfassung der Geometrie des Armsystems berechnen lassen. Eine Messung der Kräfte soll nicht ausgeschlossen sein.

Reibungskräfte in der Lagerstelle können sich beispielsweise aus Parametern des Antriebs, wie etwa in einem Hydraulikantrieb herrschende Drücke oder Leistungsaufnahme eines elektrischen Antriebs, berechnen lassen.

In einer Ausführung des Verfahrens kann sich der erste Wert auf eine erste Konfiguration der Kranarme des Armsystems beziehen. Die Kranarme des Armsystems bei der zweiten Aktivierung des Antriebs im zweiten Antriebs-Verfahrensschritt können sich in einer zweiten Konfiguration befinden. Die erste und die zweite Konfiguration der Kranarme können im Wesentlichen identisch sein oder sich unterscheiden.

Als Konfiguration der Kranarme kann allgemein die Relativstellung der Arme zueinander verstanden werden. Die relative Stellung der Arme zueinander kann durch eine gewisse Winkelstellung bei gelenkiger Lagerung und/oder eine gewisse Schubstellung bei einer zueinander verschiebbaren Lagerung der Arme gegeben sein.

In einer Ausführung des Verfahrens können die Bewegung der Kranarme des Armsystems für die erste Aktivierung des zumindest einen Antriebs und die Bewegung der Kranarme des Armsystems im Antriebs-Verfahrensschritt im Wesentlichen identisch sein oder sich die Bewegungen unterscheiden.

Bewegungen der Kranarme können sich in der Änderung der Winkelstellung bei gelenkiger Lagerung und/oder in der Änderung der Schubstellung bei einer zueinander verschiebbaren Lagerung der Arme unterscheiden.

Bei Aktivierungen des Antriebs kann eine gleiche Bewegung stattfinden, etwa ein Verschieben entlang einer bestimmten Wegstrecke oder ein Verschwenken um einen bestimmten Winkel, die Ausgangspunkte der Relativbewegung können sich jedoch unterscheiden.

So kann beispielsweise ein gelenkig an einem Hubarm gelagerter Knickarm mit Ausschüben bei unterschiedlichen Aktivierungen mit der gleichen Bewegung aus einer horizontalen Lage um einen bestimmten Winkel verschwenkt werden, es können jedoch unterschiedliche, währen der Bewegung statische Schubstellungen der Ausschübe vorliegen und somit unterschiedliche Belastungen der Lager auftreten.

Die Konfiguration der Kranarme kann so Einfluss auf den erfassten ersten und/oder zweiten Wert haben.

Bei Aktivierungen des Antriebs kann für gleiche Konfigurationen stattfinden, die auftretenden Relativbewegung können sich jedoch unterscheiden.

So kann beispielsweise ein gelenkig an einem Hubarm gelagerter Knickarm mit Ausschüben bei unterschiedlichen Aktivierungen mit der gleichen Stellung der Ausschübe bewegt werden, es können jedoch unterschiedliche Bewegungen und somit unterschiedliche Belastungen der Lager auftreten. Die Bewegung der Kranarme kann so Einfluss auf den erfassten ersten und/oder zweiten Wert haben.

In einer Ausführung kann durch eine geeignete Wahl der Konfigurationen und/oder der Bewegungen des Kranarms für den ersten und den zweiten Wert eine direkt miteinander vergleichbare Charakterisierung der Lagerreibung erfolgen.

Ein Intervall, über welches die Bewegung der zumindest einen Lagerstelle erfolgt, kann beispielsweise einen gewissen Winkelbereich bei einer gelenkigen Lagerung und/oder eine gewisse Wegstrecke bei einer verschiebbaren Lagerung sein.

Vorteilhaft kann für die Aktivierung des zumindest einen ersten und des zumindest einen zweiten Antriebs zumindest ein teilweiser Überlapp der Intervalle, über welche die Bewegung der zumindest einen Lagerstelle erfolgt, bestehen.

In einer Ausführung, in welcher eine erste und eine zweite Kennzahl der Lagerreibung errechnet werden, kann für unterschiedliche Konfigurationen und/oder unterschiedliche Bewegungen für die Erfassung des ersten und des zweiten Werts eine miteinander vergleichbare Charakterisierung der Lagerreibung erfolgen.

Für das Verfahren kann vorteilhaft im ersten und im zweiten Erfassungs-Verfahrensschritt als erster und/oder zweiter Wert
- eine Losbrechkraft und/oder ein Losbrechmoment der zumindest einen Lagerstelle und/oder
- zumindest ein Parameter des zumindest einen Antriebs, vorzugsweise der Energieaufnahme oder Pumpenleistung, und/oder
- eine Reibkraft der zumindest einen Lagerstelle und/oder
- ein Hydraulikdruck eines Hydraulikzylinders des Antriebs
erfasst werden.

Insbesondere kann der zumindest eine Antrieb als ein Hydraulikzylinder ausgebildet sein und zumindest ein Hydraulikdruck des Hydraulikzylinders erfasst werden. Vorteilhaft kann der Antrieb als ein doppelwirkender Hydraulikzylinder ausgebildet sein und ein stangenseitiger und/oder ein kolbenseitiger Hydraulikdruck erfasst werden.

Werden als der erste und/oder zweite Wert nur einzelne Parameter erfasst, kann es vorteilhaft sein, wenn diese für die jeweilige Erfassung für die Aktivierung des zumindest einen ersten und des zumindest einen zweiten Antriebs zumindest ein teilweiser Überlapp der Intervalle, über welche die Bewegung der zumindest einen Lagerstelle erfolgt, besteht.

Für das Verfahren kann vorteilhaft im ersten und im zweiten Erfassungs-Verfahrensschritt als ein Parameter der Lagerreibung
- eine Erfassung der Auflagerkraft in der zumindest einen Lagerstelle und/oder
- eine Erfassung der Schubstellung zumindest des ersten und des zweiten Kranarms und/oder
- eine Erfassung der Momentbelastung der zumindest einen Lagerstelle und/oder
- eine Erfassung der Knickwinkelstellung zumindest des ersten und des zweiten Kranarms und/oder
- eine Erfassung einer am Armsystem angeschlagenen Last erfolgen.

Durch die Erfassung weiterer Parameter, insbesondere Parameter der Geometrie des Kranarms, kann für unterschiedliche Konfigurationen und/oder unterschiedliche Bewegungen für die Erfassung des ersten und des zweiten Werts eine miteinander vergleichbare Charakterisierung der Lagerreibung erfolgen.

Allgemein können der erste und der zweite Wert, sowie gegebenenfalls berechnete Kennzahlen der Lagerreibung, in einer Menge zusammengefasst werden, insbesondere in einer nach einer zeitlichen Ordnungsrelation geordneten Menge.

Im Vergleichs-Verfahrensschritt des Verfahrens kann zur Bestimmung einer zeitlichen Entwicklung der Lagerreibung im Armsystem des Kranarms ein zeitlicher Verlauf für die Auswertung des zumindest einen ersten und des zumindest einen zweiten Werts erstellt werden.

Durch Erstellung einer zeitlichen Entwicklung der Lagerreibung können sich Veränderungen der Lagerstelle, etwa eine stetige Zunahme der Lagerreibung, zwischen dem ersten Erfassungs-Verfahrensschritt und dem zweiten Erfassungs-Verfahrensschritt charakterisieren lassen.

Bei der Bestimmung des zeitlichen Verlaufs kann vorteilhaft im Vergleichs-Verfahrensschritt eine zeitliche Änderung für die Auswertung des zumindest einen ersten und des zumindest einen zweiten Werts bestimmt werden.

Bei der Bestimmung einer zeitlichen Änderung kann vorteilhaft ein Gradient der zeitlichen Änderung, also wie schnell oder wie langsam die Änderung erfolgt, für die Auswertung des zumindest einen ersten und des zumindest einen zweiten Werts bestimmt werden. Dadurch können sich Trends wie etwa eine schnell zunehmende Verschlechterung der Lagerreibung erkennen lassen.

In einer vorteilhaften Ausführung des Verfahrens kann im Vergleichs-Verfahrensschritt ein Vergleich der Auswertung des zumindest einen ersten und des zumindest einen zweiten Werts mit einem vorgegebenen oder vorgebbaren Schwellwert erfolgen. Insbesondere kann bei einer quantitativen Charakterisierung der Lagerreibung ein Vergleich mit einem vorgegebenen oder vorgebbaren Schwellwert erfolgen. Ein Schwellwert kann auf einzelne Parameter und/oder eine Kennzahl der Lagerreibung bezogen sein.

Schutz wird auch begehrt für eine Steuerung mit einer Recheneinheit für einen Kran mit einem Kranarm, die zur Durchführung eines wie zuvor beschriebenen Verfahrens zur Bestimmung einer Lagerreibung im Armsystem des Kranarms ausgebildet ist.

Von der Steuerung kann in einem Antriebs-Betriebsmodus eine erste und eine zweite Aktivierung des zumindest einen Antriebs des Armsystems, bei welcher jeweils eine Bewegung zumindest des zweiten Kranarms relativ zum ersten Kranarm erfolgt, durchführbar sein. Bei einer Aktivierung des zumindest einen Antriebs des Armsystems können einzelne Arme durch Abgabe von Steuerbefehlen durch einen Benutzer im Wesentlichen frei bewegt werden, oder eine von der Recheneinheit der Steuerung vorgegebene Abfolge von Bewegungen erfolgen.

In einem Erfassungs-Betriebsmodus kann während der ersten und der zweiten Aktivierung des Antriebs eine Erfassung von zumindest einem ersten und zumindest einem zweiten Wert, der jeweils für eine Lagerreibung der zumindest einen Lagerstelle charakteristisch ist, durchführbar sein. Der zumindest eine und zumindest zweite Wert können in einer mit der Recheneinheit der Steuerung kommunizierenden Speichereinheit gespeichert werden.

In einem Auswert-Betriebsmodus kann durch eine Auswertung des zumindest einen erfassten ersten Werts und des zumindest einen erfassten zweiten Werts eine Charakterisierung der Lagerreibung in dem Armsystem des Kranarms durchführbar sein. Bei der Charakterisierung der Lagerreibung können Berechnungen unter Einbeziehung des zumindest einen ersten Werts und des zumindest einen zweiten Werts erfolgen.

In einer vorteilhaften Ausführung der Steuerung kann eine Auswertung zu der im Auswert-Verfahrensschritt charakterisierten Lagerreibung im Armsystem des Kranarms an einer mit der Recheneinheit kommunizierenden Anzeige anzeigbar sein.

Eine Anzeige kann beispielsweise eine qualitative Charakterisierung der Lagerreibung, wie etwa eine positive oder negative Beurteilung, eine Aufforderung zur Wartung oder eine Anzeige einer defekten Lagerstelle umfassen.

Eine Anzeige kann beispielsweise eine quantitative Charakterisierung der Lagerreibung, wie etwa eine Angabe eines Reibungskoeffizienten, einer Losbrechkraft und/oder eines Losbrechmoments, einer Reibkraft oder einer relativen numerischen Angabe der Güte der Lagerstelle umfassen.

Schutz wird auch begehrt für ein Computerprogrammprodukt für eine Steuerung nach einem der Ansprüche 11 oder 12, umfassend Befehle, welche bei einer Ausführung durch die Recheneinheit (17) diese veranlassen, aus einer Speichereinheit (18), welche mit der Recheneinheit (17) in einer Datenverbindung steht oder in eine solche bringbar ist, ein Verfahren nach einem der Ansprüche 1 bis 10 auszuführen.

Das Computerprogrammprodukt kann beispielsweise in wenigstens einer Speichereinheit der Steuerung hinterlegt sein.

Schutz wird auch begehrt für einen Kran - bevorzugt Ladekran für ein Fahrzeug, besonders bevorzugt Knickarmkran - mit einer wie zuvor beschriebenen Steuerung mit einer Recheneinheit.

Ausführungsbeispiele der Erfindung werden anhand der Figuren diskutiert. Es zeigen:
- Fig. 1: eine Seitenansicht einer Ausführung eines Armsystems mit Sensoren zur Erfassung von Parametern der Lagerreibung,
- Fig. 2: eine Seitenansicht einer weiteren Ausführungen eines Armsystems,
- Fig. 3: eine Seitenansicht eines Fahrzeug mit einer Ausführung eines Krans,
- Fig. 4: eine Seitenansicht einer Ausführung eines Armsystems mit einem gelenkig gelagerten Knickarm,
- Fig. 5: eine Seitenansicht einer Ausführung eines Armsystems mit einem längenveränderbaren Knickarm mit verschiebbar gelagerten Ausschüben,
- Fig. 6: eine Seitenansicht einer Ausführung eines Krans mit einem Kranarm, einer Steuerung und ausgewählten Sensoren zur Erfassung von Parametern der Lagerreibung,
- Fig. 7a und 7b: schematische Darstellungen von Ausführungen des Verfahrens,
- Fig. 8a bis 8c: schematische Darstellungen eines Armsystems während einer Bewegung,
- Fig. 9a bis 9d: grafische Darstellungen erfasster Werte und Auswertungen erfasster Werte,
- Fig. 10a bis 10c: schematische Darstellungen eines Armsystems während einer Bewegung,
- Fig. 11a und 11b: grafische Darstellungen erfasster Werte und Auswertungen erfasster Werte,
- Fig. 12a und 12b: schematische Darstellungen eines Armsystems während einer Bewegung,
- Fig. 13a und 13b: grafische Darstellungen erfasster Werte und Auswertungen erfasster Werte, und
- Fig. 14a und 14b: eine Ausführung einer Anordnung aus einer Funkfernsteuerung und einer Steuerung und eine Ausführung einer Darstellung auf einer Anzeige.

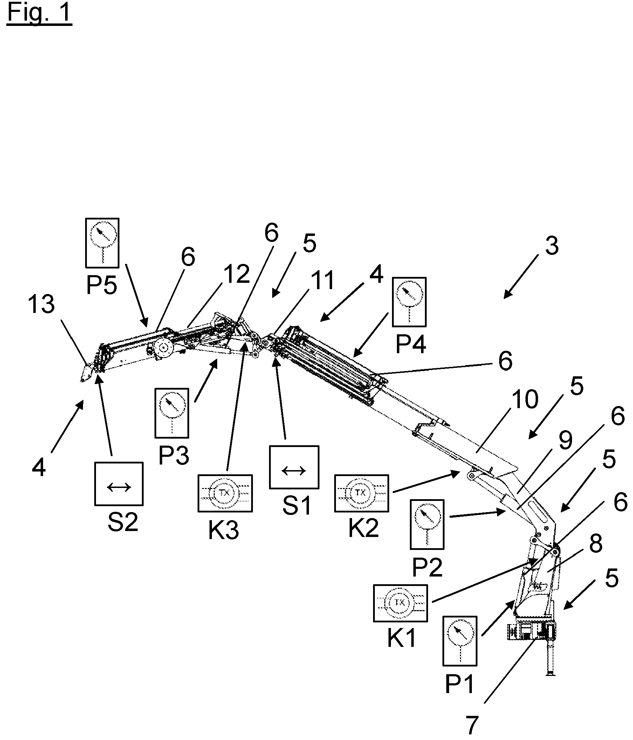

Figur 1 zeigt eine Seitenansicht einer Ausführung eines Armsystems eines Kranarms 3 mit Sensoren zur Erfassung von Betriebsparametern, welche als Parameter der Lagerreibung heranziehbar sind. Der Kranarm 3 kann als Kranarme zumindest eine schwenkbar an einer Basis 7 gelagerte Kransäule 8, einen gelenkig an dieser gelagerten Hubarm 9 und einen gelenkig an diesem gelagerten Knickarm 10 aufweisen. Der Knickarm 10 kann längenveränderbar mit zueinander verschiebbaren Ausschüben ausgebildet sein, wobei ein vorderster Ausschub 11 erkennbar ist. Am Knickarm 10 kann wie in Figur 1 dargestellt ein weiterer Kranarm, etwa in Form eines weiteren Knickarms 12, gelenkig angeordnet sein. Es soll nicht ausgeschlossen sein, dass der Hubarm 9 anders als dargestellt zueinander verschiebbare Ausschübe aufweist.

Das Armsystem kann Antriebe 6 für die Relativbewegungen der Kranarme 7, 8, 9, 10, 11, 12, 13, 14 zueinander aufweisen. Ein solcher Antrieb 6 kann beispielsweise als ein Hydraulikzylinder zwischen zwei zueinander bewegbaren Kranarmen vorliegen.

Zur Erfassung von Betriebsparametern des Armsystems, welche als Parameter der Lagerreibung heranziehbar sind, können Drucksensoren P1, P2, P3, P4, P5 zur Erfassung von Hydraulikdrücken der Antriebe 6, Winkelsensoren K1, K2, K3 zur Erfassung von Winkelstellungen und Schubstellungssensoren S1, S2 zur Erfassung von Längserstreckungen vorgesehen sein. Es soll nicht ausgeschlossen sein, dass die Drucksensoren P1, P2, P3, P4, P5 einen kolbenseitigen und stangenseitigen Hydraulikdruck der Hydraulikzylinder erfassen können. Es soll nicht ausgeschlossen sein, dass das Armsystem weitere Sensoren, beispielsweise zur Erfassung einer Losbrechkraft, einer Reibkraft oder weiterer Parameter von Antrieben 6, aufweist.

Bei der Bestimmung einer Lagerreibung können allgemein betrachtet der zumindest eine erste Kranarm und der zumindest eine zweite Kranarm gelenkig miteinander über eine Lagerstelle 4, 5 verbunden sein. Zur Längenveränderbarkeit können zwei Kranarme über eine Lagerstelle 4 verschiebbar gelagert sein. Zur Anordnung unter einem veränderbaren Winkel zueinander können zwei Kranarme über eine Lagerstelle 5 gelenkig gelagert sein.

Bei einer solchen Betrachtung kann beispielsweis die Kransäule 8 als erster Kranarm gelenkig über eine Lagerstelle 5 mit dem Hubarm 9 als zweiter Kranarm verbunden sein. Analog dazu können die Basis 7 und die Kransäule 8, der Hubarm 9 und der Knickarm 10, und der Knickarm 10 mit dem weiteren Knickarm 12 gelenkig über eine Lagerstelle 5, jeweils als erster und zweiter Kranarm identifiziert, aneinander gelagert sein.

Der längenveränderbare Knickarm 10 kann bei einer solchen Betrachtung als erster Kranarm über eine Lagerstelle 4 verschiebbar zum Ausschub 11 gelagert sein. Analog dazu kann der weitere Knickarm 12 über eine Lagerstelle 4 verschiebbar zum weiteren Ausschub 13 gelagert sein. Ausschübe von längenveränderbaren Kranarmen können allgemein über eine Lagerstelle 4, jeweils als erster und zweiter Kranarm identifiziert, verschiebbar zueinander gelagert sein.

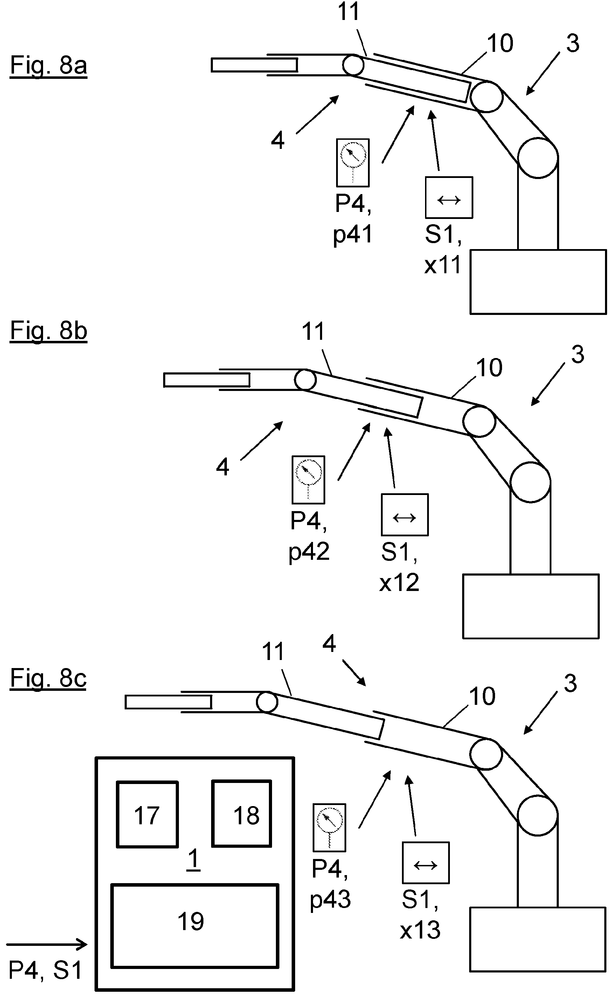

Eine korrespondierende schematische Darstellung eines Armsystems eines Kranarms 3 mit zumindest einem ersten Kranarm und einem zweiten Kranarm, welche nach der Ausführung der Figur 1 modelliert ist, ist in den Figuren 8, 10 und 12 gezeigt.

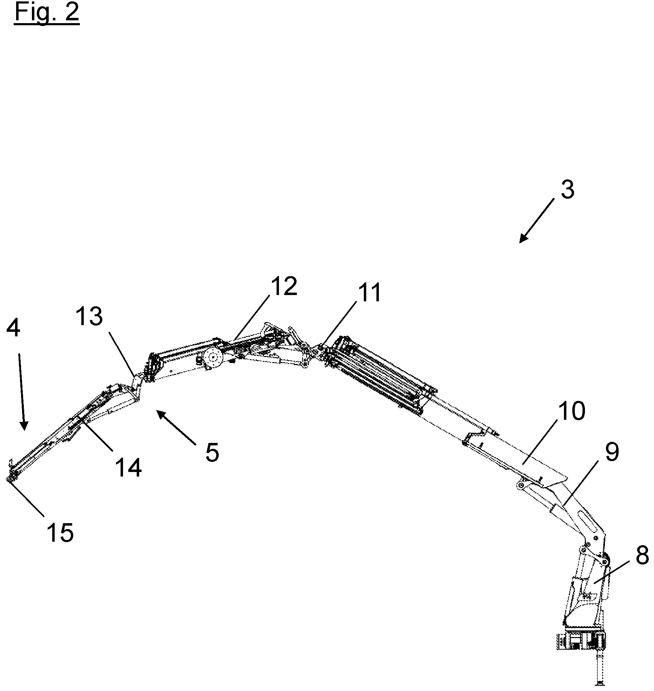

Figur 2 zeigt eine weitere Seitenansicht einer Ausführung eines Armsystems eines Kranarms 3, wobei diese Ausführung zusätzlich zu der in Figur 1 gezeigten Ausführung noch einen weiteren Knickarm 14 mit Ausschub 15 aufweist.

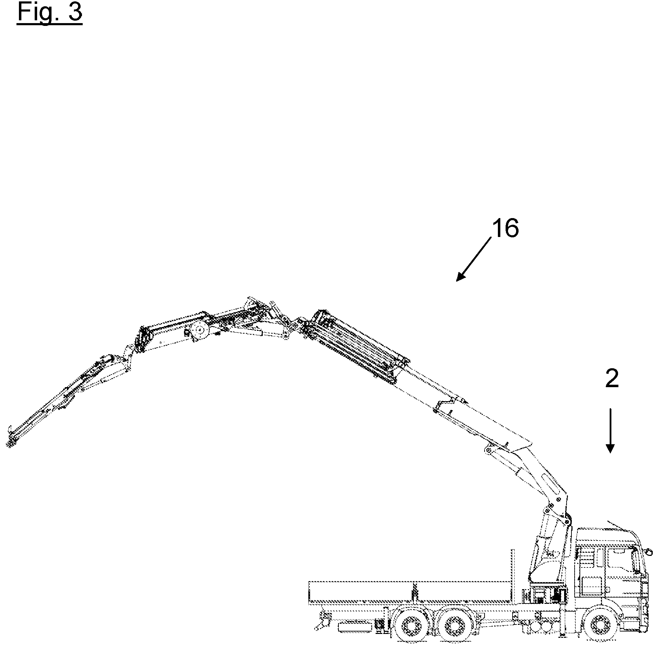

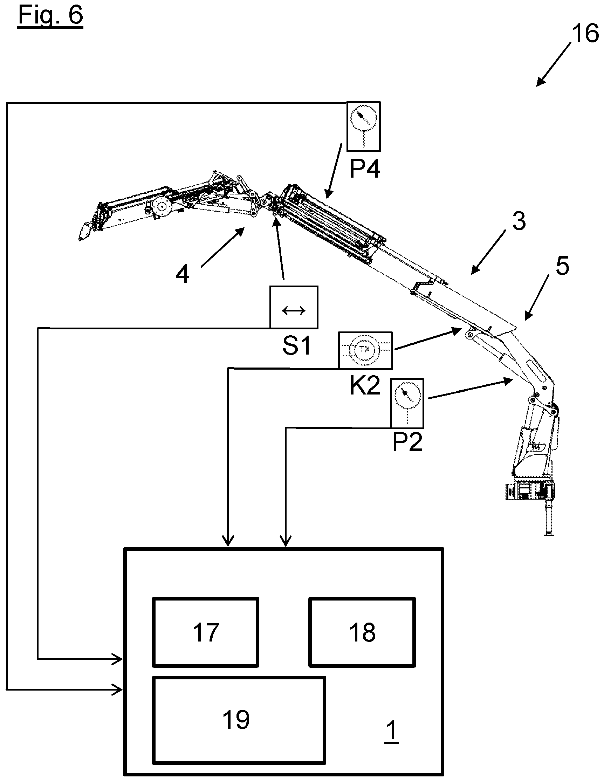

Figur 3 zeigt einen auf einem Fahrzeug 2 montierten Kran 16 (siehe dazu etwa Figur 6), wobei der Kranarm 3 des Krans 16 wie in der Figur 3 ausgeführt ist.

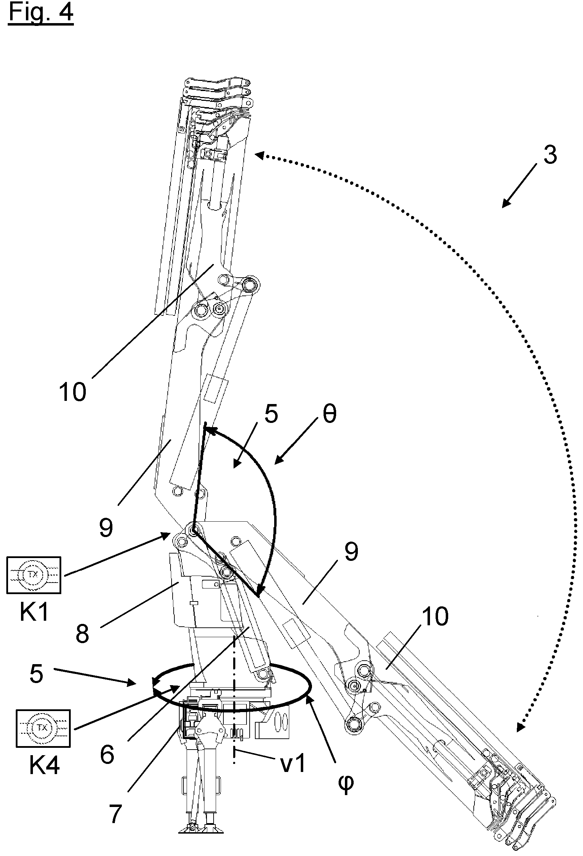

Figur 4 zeigt eine zur Ausführung der Figur 1 ähnliche Ausführung eines Kranarms 3 mit einer schwenkbaren Kransäule 8, einem heb- und senkbaren Hubarm 9 und einem gelenkig daran gelagerten Knickarm 10. In dieser Figur sind der Schwenkwinkelbereich des Schwenkwinkels φ der Kransäule 8 zur Basis 7 um eine vertikale Schwenkachse v1 und der Knickwinkelbereich des Knickwinkels θ des Hubarms 9 zur Kransäule 8 illustriert. Eine solche Bewegung zweier Kranarme des Armsystems zueinander kann sich - zumindest abschnittsweise - bei einem Aktivieren eines entsprechenden Antriebs 6 (nicht dargestellt für die Kransäule 8, für den Hubarm 9 etwa in Form des Hydraulikzylinders) des Armsystems ergeben. Der Schwenkwinkel φ der Kransäule 8 zur Basis 7 kann mit einem Winkelsensor K4 erfasst werden.

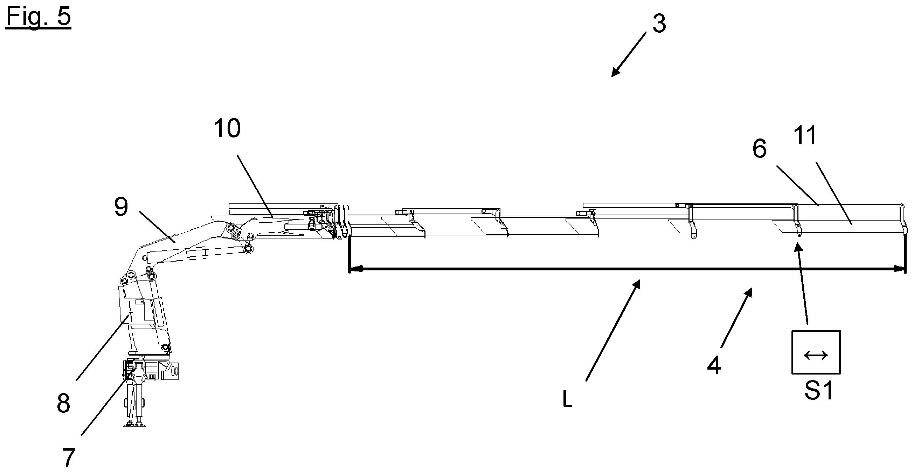

Figur 5 zeigt die Ausführung des Kranarms 3 der Figur 4 mit horizontal gestelltem Knickarm 10 und im Wesentlichen vollständig ausgefahrenen Ausschüben, von welchen der Aufschub 11 den vordersten der Ausschübe bildet. Eine sich damit ergebende Längserstreckung L des Knickarms 10 kann über den Schubstellungssensor S1, beispielsweise in Form eines Messseils, erfasst werden.

Figur 6 zeigt eine Ausführung eines Krans 16 mit einem analog zur Ausführung der Figur 1 gestalteten Kranarm 3 und einer Steuerung 1. Die Steuerung 1 weist eine Recheneinheit 17 und eine mit der Recheneinheit 17 in Datenverbindung stehende oder in eine solche bringbare Speichereinheit 18 auf. Die Steuerung 1 kann zur Aktivierung der Antriebe 6 in Form der Hydraulikzylinder und zur Erfassung von Betriebsparametern des Armsystems in Form von Messwerten ausgebildet sein. Die Steuerung 1 weist in dieser Ausführung weiter eine Benutzerschnittstelle 19 auf, über welche der Kran 16 durch einen Benutzer steuerbar sein kann. Es ist auch möglich, dass über die Benutzerschnittstelle 19 Werte, welche für eine Lagerreibung der zumindest einen Lagerstelle 4,5 bei einem Aktivieren des zumindest einen Antriebs 6 des Armsystems zur Bewegung zumindest des zweiten Kranarms 11 relativ zum ersten Kranarm 10 charakteristisch ist, eingebbar sind. Es soll nicht ausgeschlossen sein, dass der Steuerung 1, insbesondere der Speichereinheit 18 der Steuerung 1, über zumindest eine weitere Datenschnittstelle der Steuerung 1 zusätzlich oder alternativ zu den Messwerten aus anderen Quellen stammende Werte zuführbar sind.

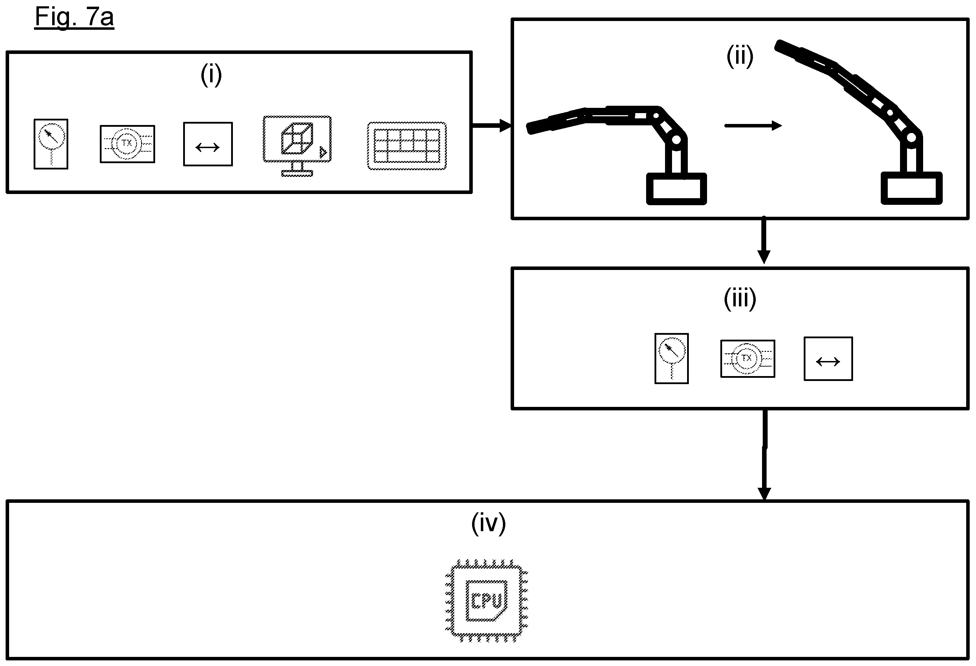

In Figur 7a ist schematisch eine Ausführung des Verfahrens zur Bestimmung einer Lagerreibung in einem Armsystem eines Kranarms 3 illustriert.

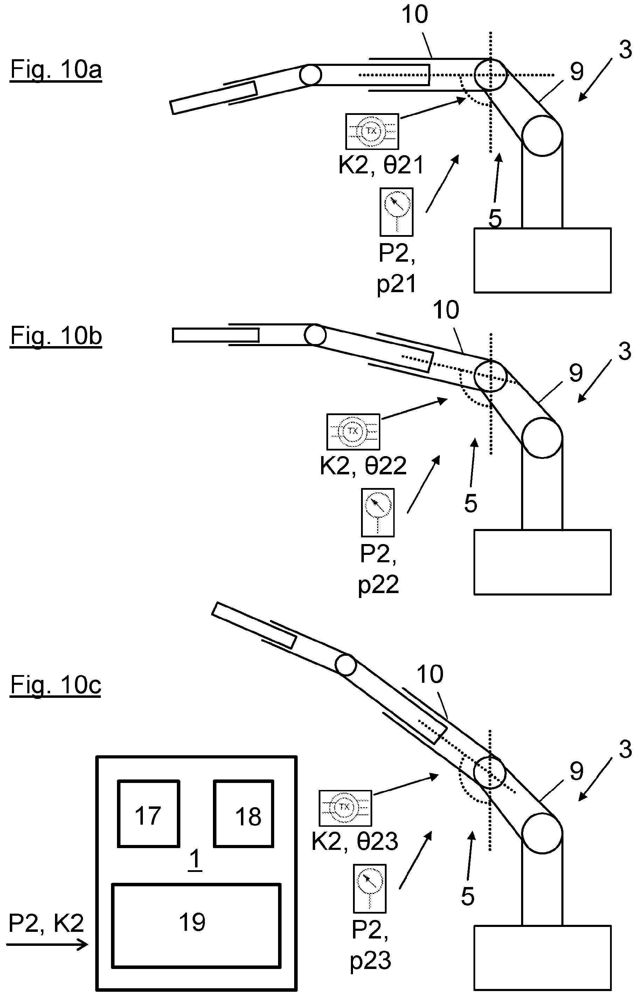

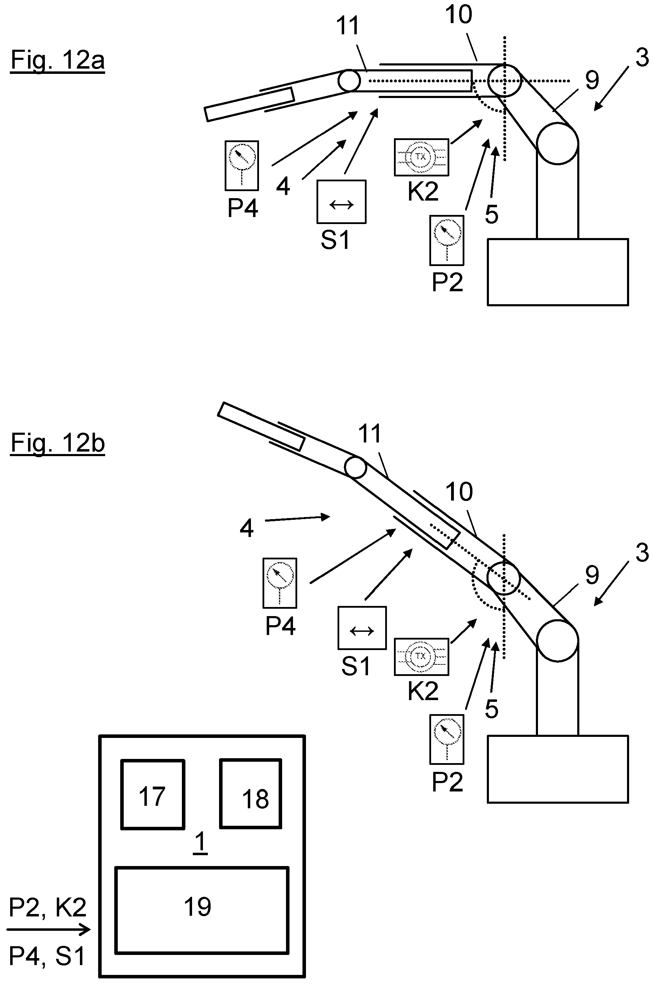

Das Armsystem weist zumindest einen ersten Kranarm und einen zweiten Kranarm auf, wobei (Figur 8) der zweite Kranarm in Form des Ausschubs 11 zumindest abschnittsweise in dem ersten Kranarm in Form des Knickarms 10 über zumindest eine Lagerstelle 4 verschiebbar gelagert ist und/oder (Figuren 10 und 12) der zweite Kranarm in Form des Knickarms 10 an dem ersten Kranarm in Form des Hubarms 9 über zumindest eine Lagerstelle 5 gelenkig gelagert ist. Das Armsystem weist zumindest einen Antrieb 6 in Form eines Hydraulikzylinders für den zumindest ersten und zweiten Kranarm auf, bei dessen Aktivierung eine Relativbewegung zwischen dem zumindest einen ersten Kranarm und dem zumindest einen zweiten Kranarm erfolgen kann.

In einem ersten Erfassungs-Verfahrensschritt i kann eine Erfassung von zumindest einem ersten Wert, der für eine Lagerreibung der zumindest einen Lagerstelle 4, 5 bei einem ersten Aktivieren des zumindest einen Antriebs 6 in Form des Hydraulikzylinders des Armsystems zur Bewegung zumindest des zweiten Kranarms relativ zum ersten Kranarm charakteristisch ist, erfolgen.

Im ersten Erfassungs-Verfahrensschritt kann der zumindest eine erste Wert
- während einem ersten Aktivieren des zumindest einen Antriebs 6 in Form eines Hydraulikzylinders des Armsystems, bei welcher eine Bewegung zumindest des zweiten Kranarms relativ zum ersten Kranarm erfolgt, messtechnisch in Form von zumindest einem für eine Lagerreibung der zumindest einen Lagerstelle 4, 5 charakteristischen Messwerts erfasst werden, und/oder
- in Form zumindest eines aus einer Simulation gewonnenen Werts erfasst werden, welcher beispielsweise der Steuerung 1, insbesondere der Speichereinheit 18, über eine entsprechende Datenschnittstelle zuführbar sein kann, und/oder
- in Form zumindest eines empirisch gewonnenen Werts erfasst werden, welcher beispielsweise der Steuerung 1, insbesondere der Speichereinheit 18, über eine entsprechende Datenschnittstelle zuführbar sein kann, und/oder
- in Form eines nominellen Werts erfasst werden, welche beispielsweise der Steuerung 1, insbesondere der Speichereinheit 187 über eine entsprechende Datenschnittstelle zuführbar sein kann.

Der zumindest eine erste Wert kann in einer Speichereinheit 18 der Steuerung 1 gespeichert werden.

In einem Antriebs-Verfahrensschritt ii kann ein zweites Aktivieren des zumindest einen Antriebs 6 des Armsystems erfolgen. Bei dem Aktivieren kann wie in den Figuren 8, 10 und 12 beispielhaft illustriert eine Bewegung zumindest des zweiten Kranarms relativ zum ersten Kranarm erfolgen.

In einem zweiten Erfassungs-Verfahrensschritt iii kann während der zweiten Aktivierung des zumindest einen Antriebs 6 in Form des Hydraulikzylinders eine Erfassung von zumindest einem zweiten Wert, der ein für eine Lagerreibung der zumindest einen Lagerstelle 4, 5 charakteristischer Messwert ist, erfolgen.

Der zumindest eine zweite Wert kann in einer Speichereinheit 18 der Steuerung 1 gespeichert werden.

In einem Auswert-Verfahrensschritt iv kann durch eine Auswertung, bei welcher die Werte aus der Speichereinheit 18 ausgelesen werden können, des zumindest einen ersten Werts und des zumindest einen während der zweiten Aktivierung des Antriebs 6 erfassten zweiten Werts eine Charakterisierung der Lagerreibung der zumindest einen Lagerstelle 4, 5 erfolgen.

Die Auswertung kann beispielsweise durch eine Recheneinheit 17 der Steuerung 1 erfolgen.

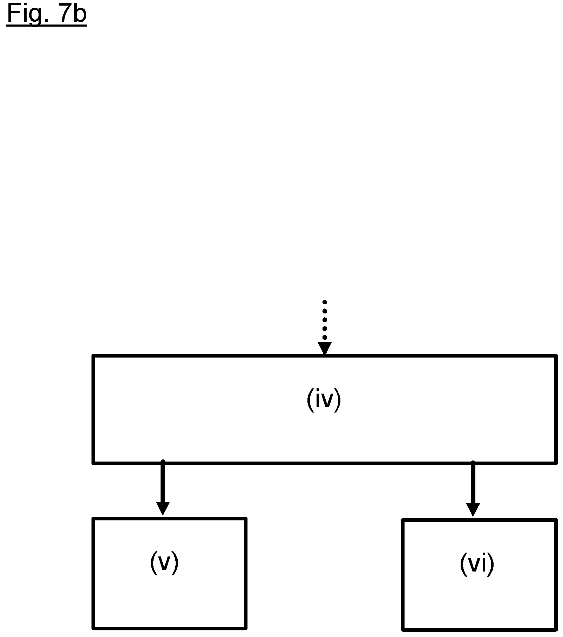

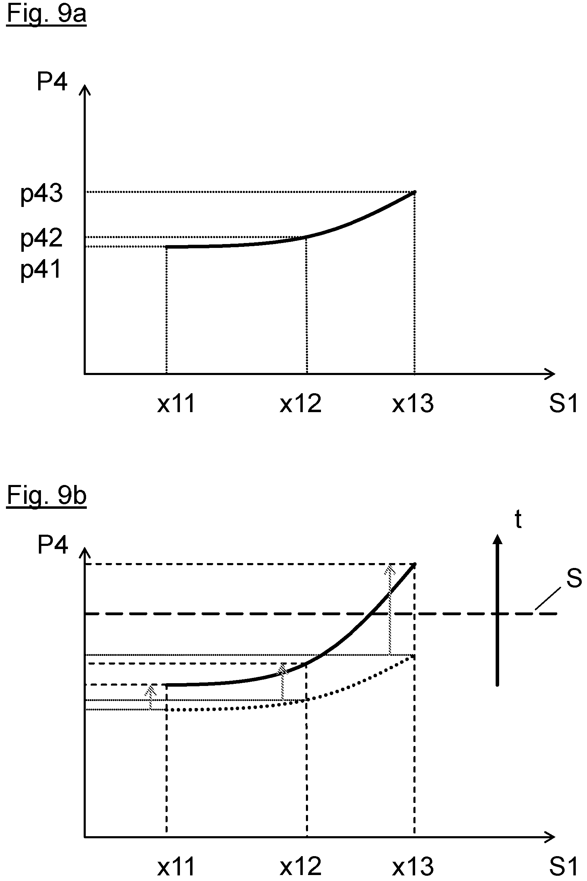

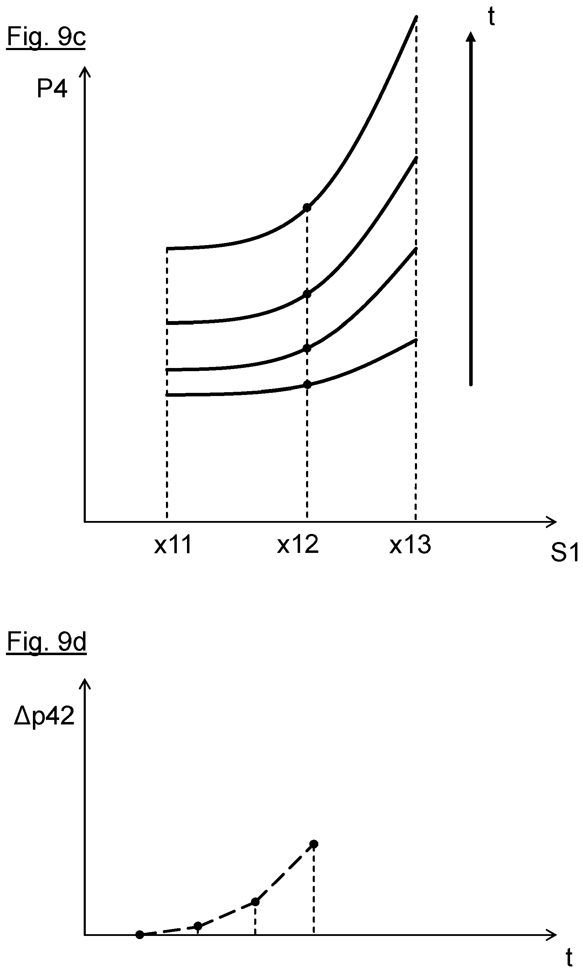

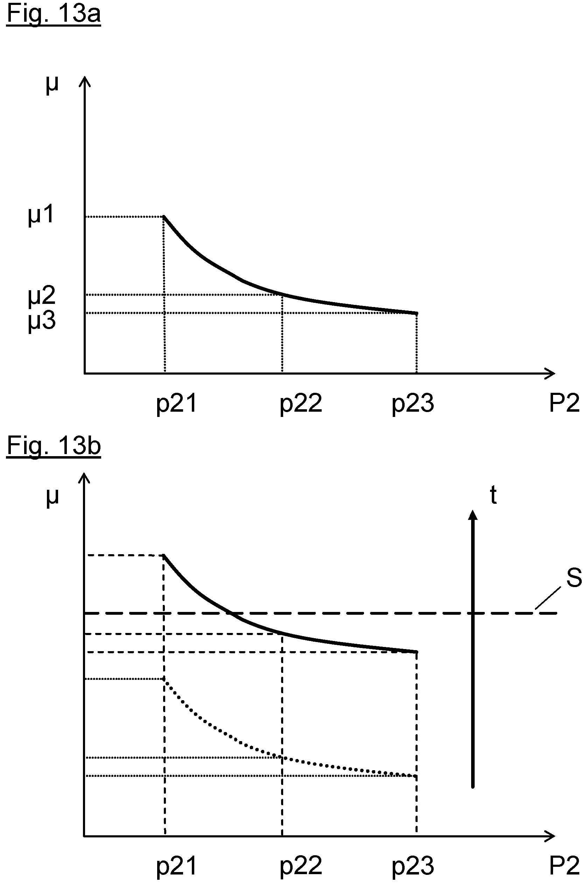

In Figur 7b ist eine Fortbildung des Verfahrens gezeigt, bei welcher in einem Berechnungs-Verfahrensschritt v zumindest eine erste und eine zweite Kennzahl der Lagerreibung berechenbar ist (siehe beispielsweise Figur 13), und alternativ oder in Kombination in einem Vergleichs-Verfahrensschritt vi eine zeitliche Entwicklung der Lagerreibung im Armsystem des Kranarms bestimmbar ist (siehe beispielsweise Figur 9).

In den Figuren 8 und 10 sind jeweils schematisch Bewegungen eines Kranarms 3 dargestellt, bei welchen jeweils die Art der Bewegung der Kranarme des Armsystems für eine erste Aktivierung des zumindest einen Antriebs 6 und die Bewegung der Kranarme des Armsystems im Antriebs-Verfahrensschritt identisch sind. Auch sind die jeweiligen Konfigurationen der Kranarme vergleichbar, es findet also keine Überlagerung unterschiedlicher Bewegungen statt.

In den Figuren 8a bis 8c sind schematische Darstellungen eines Armsystems während einer Bewegung gezeigt. Die Ausführung des schematisch dargestellten Kranarms 3 kann im Wesentlichen jener der Figuren 1, 4, 5 und 6 entsprechen.

Illustriert ist eine Relativbewegung eines zweiten Kranarms in Form eines Ausschubs 11 zu einem ersten Kranarm in Form eines Knickarms 10, angetrieben durch einen hier nicht dargestellten Antrieb 6 in Form beispielsweise eines Hydraulikzylinders. Es werden drei unterschiedliche Längserstreckungen L mit Schubstellungen x11, x12, x13, erfasst von einem Schubstellungssensor S1, gezeigt. Die sich während der Bewegung entsprechend einstellenden Hydraulikdrücke p41, p42, p43 werden von einem Drucksensor P4 erfasst. Dies kann beispielsweise in einem ersten und/oder zweiten Erfassung-Verfahrensschritt i, ii erfolgen. Die Sensordaten können einer Steuerung 1 zuführbar sein.

Die in den Figuren 8a bis 8c schematisch dargestellte Bewegung kann einer Aktivierung des zumindest einen Antriebs 6 in einem ersten Erfassung-Verfahrensschritt i entsprechen. Auch kann die dargestellte Bewegung einer Aktivierung in einem Antriebs-Verfahrensschritt ii entsprechen.

Während des Arbeitsbetriebs des Kranarms 3 kann die Bewegung vielfach wiederholt werden. Dabei kann jeweils eine Aufzeichnung der Sensordaten erfolgen.

Figur 9a zeigt den Verlauf des mit dem Drucksensor P4 erfassten Hydraulikdrucks über der durch den Schubstellungssensor S1 erfassten Schubstellung.

Die Erfassung des Hydraulikdrucks kann einem ersten Erfassungs-Verfahrensschritt i erfolgen. Die Erfassung von zumindest einem ersten Wert in Form des Hydraulikdrucks, der für eine Lagerreibung der zumindest einen Lagerstelle 4 bei einem ersten Aktivieren des zumindest einen Antriebs 6 des Armsystems zur Bewegung zumindest des zweiten Kranarms in Form des Ausschubs 11 relativ zum ersten Kranarm in Form des Knickarms 10 charakteristisch ist, kann messtechnisch, beispielsweise bei einer wie in Figur 8 dargestellten Bewegung, oder durch Vorgabe eines Werts erfolgen.

Die Erfassung von zumindest einem ersten und/oder zweiten Wert kann grundsätzlich an zumindest einem Punkt oder kontinuierlich erfolgen.

Figur 9b zeigt zusätzlich zu dem in Figur 9a gezeigten Verlauf (punktierte Linie) den Verlauf eines zweiten Werts in Form eines mit dem Drucksensor P4 erfassten Hydraulikdrucks. Der zusätzlich dargestellte Verlauf eines zweiten Werts in Form des Hydraulikdrucks kann zu einer späteren Zeit t, beispielsweise nach einer gewissen Anzahl von Betriebsstunden des Kranarms 3, in einem zweiten Erfassungs-Verfahrensschritt iii während einer zweiten Aktivierung gemäß der Figur 8 des zumindest einen Antriebs 6 erfasst worden sein.

Bei einer Auswertung in einem Auswert-Verfahrensschritt iv kann eine Charakterisierung der Lagerreibung der zumindest einen Lagerstelle 4 erfolgen.

Qualitativ kann durch den für die in dieser Ausführung gleiche Bewegung allgemein höheren benötigten Hydraulikdruck festgestellt werden, dass sich die Lagerreibung erhöht hat.

In einem Vergleichs-Verfahrensschritt vi kann ein Vergleich der Auswertung des zumindest einen ersten und des zumindest einen zweiten Werts mit einem vorgegebenen oder vorgebbaren Schwellwert S erfolgen.

In einem Berechnungs-Verfahrensschritt v für den Auswert-Verfahrensschritt iv kann aus dem zumindest einen ersten und dem zumindest einen zweiten Wert zumindest eine erste und eine zweite Kennzahl der Lagerreibung errechnet werden. Wird durch den Drucksensor P4 beispielsweise der stangenseitige und kolbenseitige Hydraulikdruck erfasst, kann die für die Bewegung des Ausschubs 4 benötigte Kraft als Kennzahl der Lagerreibung der Lagerstelle 4 berechnet werden.

Figur 9c zeigt eine Schar an Verläufen von durch den Drucksensor P4 erfassten Hydraulikdrücken. Die einzelnen Verläufe können, ausgehend von einem ersten Erfassungs-Verfahrensschritt i, in einer Wiederholung von Antriebs-Verfahrensschritten ii und zweiten Erfassungs-Verfahrensschritten iii zu unterschiedlichen Zeiten t, vorteilhaft etwa in regelmäßigen Abständen oder entsprechend gewichteten Abständen von Betriebsstunden des Kranarms 3, erfasst worden sein.

In Figur 9d ist ein zeitlicher Verlauf der Druckzunahme Δp42 des punktuell bei der Schubstellung x12 erfassten Hydraulikdrucks p42 dargestellt.

Im Auswert-Verfahrensschritt iv kann dazu der jeweils von dem im zweiten Erfassungs-Verfahrensschritt iii bei der Schubstellung x12 erfassten Hydraulikdruck p42 der entsprechende im ersten Erfassungs-Verfahrensschritt i erfasste Hydraulikdruck p42 abgezogen werden. In einem Vergleichs-Verfahrensschritt vi kann zur Bestimmung einer zeitlichen Entwicklung der Lagerreibung im Armsystem des Kranarms 3 ein zeitlicher Verlauf für eine solche beispielhafte Auswertung des zumindest einen ersten und des zumindest einen zweiten Werts in Form der Hydraulikdrücke p42 erstellt werden. Dadurch kann sich auch eine zeitliche Änderung für die Auswertung bestimmen lassen. Insbesondere kann ein Gradient der zeitlichen Änderung, also eine Steilheit der Zunahme, für die Auswertung bestimmt werden.

In den Figuren 10a bis 10c sind schematische Darstellungen eines Armsystems während einer Bewegung um die Lagerstelle 5 gezeigt. Die Ausführung des schematisch dargestellten Kranarms 3 kann im Wesentlichen jener der Figuren 1, 4, 5 und 6 entsprechen.

Illustriert ist eine Relativbewegung um die Lagerstelle 5 eines zweiten Kranarms in Form eines Knickarms 10 zu einem ersten Kranarm in Form eines Hubarms 9, angetrieben durch einen hier nicht dargestellten Antrieb 6 in Form beispielsweise eines Hydraulikzylinders. Es werden drei unterschiedliche Knickwinkelstellungen θ21, θ22, θ23, erfasst von einem Winkelsensor K2, gezeigt. Die sich während der Bewegung entsprechend einstellenden Hydraulikdrücke p21, p22, p23 werden von einem Drucksensor P2 erfasst.

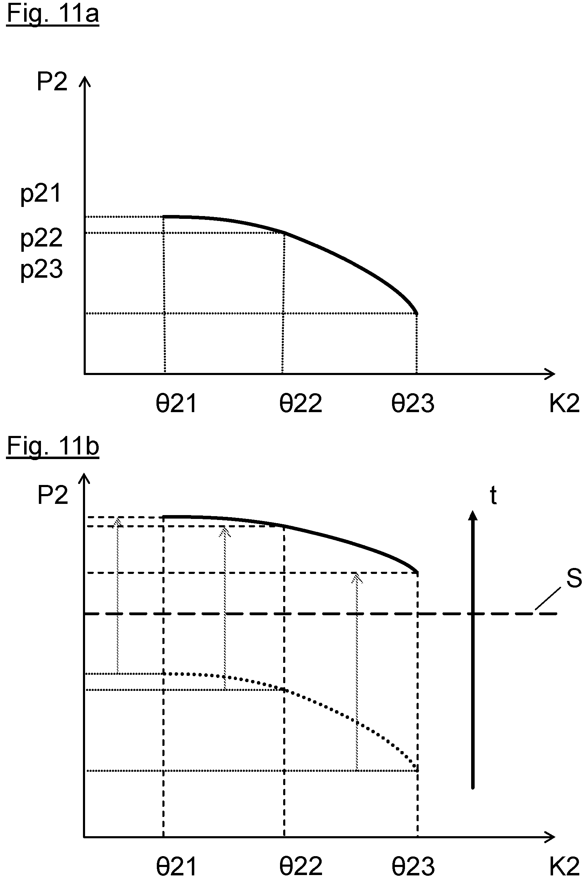

Figur 11a zeigt den Verlauf des mit dem Drucksensor P2 erfassten Hydraulikdrucks über der durch den Winkelsensor K2 erfassten Winkelstellung.

Figur 11b zeigt zusätzlich zu dem in Figur 11a gezeigten Verlauf (punktierte Linie) den Verlauf eines zweiten Werts in Form eines mit dem Drucksensor P2 erfassten Hydraulikdrucks.

Für die in den Figuren 10a bis 10c illustrierte Bewegung um die Lagerstelle 5 und die entsprechenden Auswertungen in den Figuren 11a und 11b können analoge Ausführungen und Rückschlüsse gemacht werden, wie zu jenen in den Figuren 8a bis 8c und 9a bis 9d und sollen an dieser Stelle nicht explizit wiederholt werden.

In den Figuren 12a und 12b ist schematisch eine Bewegung eines Kranarms 3 dargestellt, bei welcher im Gegensatz zu den zuvor diskutierten Beispielen sich die Bewegung der Kranarme des Armsystems für eine erste Aktivierung des zumindest einen Antriebs und die Bewegung der Kranarme des Armsystems im Antriebs-Verfahrensschritt unterscheiden. Auch unterscheiden sich die Konfigurationen der Kranarme. Es kann also eine Vielzahl unterschiedlicher Überlagerungen unterschiedlicher Bewegungen beim Übergang von Figur 12a zur Figur 12b erfolgen.

Vorteilhaft können für eine solche Bewegung von der Erfassung des ersten und/oder zweiten Werts Kennzahlen der Lagerreibung, insbesondere in Form zumindest eines dimensionslosen Reibwerts µ als Verhältnis der Reibungskraft in der Lagerstelle 4, 5 zur Anpresskraft in der Lagerstelle 4, 5, zur Charakterisierung der Lagerreibung berechnet werden.

Anpresskräfte in den Lagerstellen 4, 5 können sich beispielsweise bei bekannter Masse und Schwerpunktslage der Kranarme des Kranarms 3, sowie der Erfassung der Geometrie des Armsystems berechnen lassen. Reibungskräfte in den Lagerstellen 4, 5 können sich beispielsweise aus Parametern des Antriebs 6, wie herrschende Hydraulikdrücke, berechnen lassen.

Figur 13a zeigt den Verlauf eines ersten Werts in Form des Reibwerts µ über den dem Drucksensor P2 erfassten Hydraulikdruck im Antrieb 6 in Form des Hydraulikzylinders zwischen Knickarm 10 und Hubarm 9. Der von P2 erfasste Druck ist proportional zu der an der Lagerstelle 5 angreifenden Momentbelastung und somit aussagekräftig für den Verlauf des Reibwerts µ in der Lagerstelle 5. Eine analoge Darstellung und Charakterisierung kann zum Drucksensor P4 erfolgen, dessen erfasster Druck proportional zu der an der Lagerstelle 4 angreifenden Schubbelastung ist. Der Reibwert µ kann allgemein in einem Berechnungs-Verfahrensschritt v für den Auswert-Verfahrensschritt iv berechnet werden.

Figur 13b zeigt zusätzlich zu dem in Figur 13a gezeigten Verlauf (punktierte Linie) den Verlauf eines zweiten Werts in Form des Reibwerts µ. Der zusätzlich dargestellte Verlauf eines zweiten Werts in Form des Reibwerts µ kann zu einer späteren Zeit t, beispielsweise nach einer gewissen Anzahl von Betriebsstunden des Kranarms 3, in einem zweiten Erfassungs-Verfahrensschritt iii während einer zweiten Aktivierung gemäß der Figur 12 des zumindest einen Antriebs 6 erfasst worden sein.

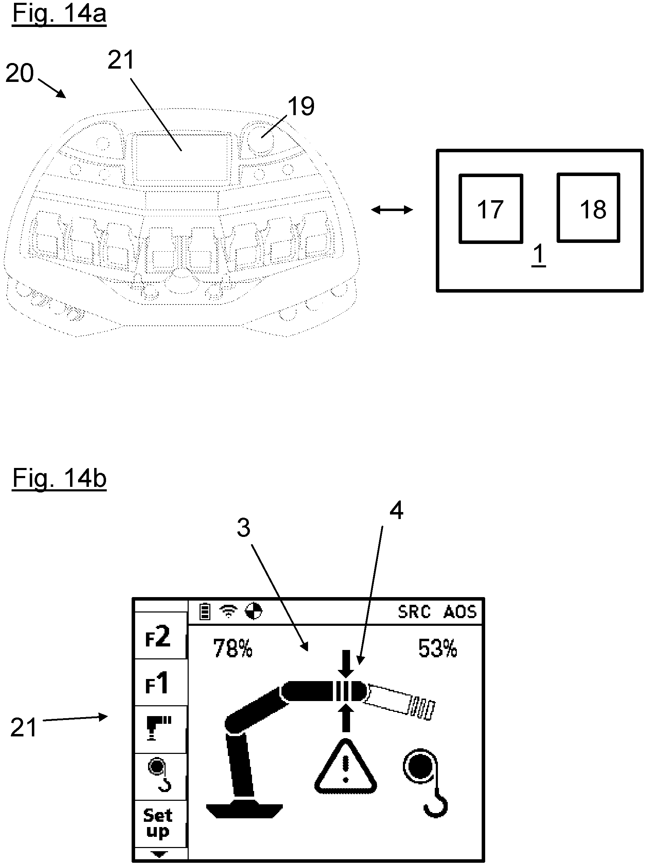

Die Figuren 14a und 14b zeigen eine Ausführung einer Anordnung aus einer Funkfernsteuerung 20 und einer Ausführung einer Steuerung 1, und eine Ausführung einer Darstellung auf einer Anzeige 21 der Funkfernsteuerung 20.

Die Funkfernsteuerung 21 kann eine Benutzerschnittstelle 19 mit unterschiedlichen Knöpfen aufweisen und drahtlos und/oder kabelgebunden mit der Steuerung 1 kommunizieren.

Auf einer Anzeige 21 der Funkfernsteuerung 20 kann eine Auswertung zu der charakterisierten Lagerreibung im Armsystem des Kranarms 3 anzeigbar sein.

Auf der Anzeige 21 kann beispielsweise eine qualitative Charakterisierung der Lagerreibung, wie etwa eine positive oder negative Beurteilung oder eine Aufforderung zur Wartung erfolgen, oder wie dargestellt eine Anzeige einer defekten Lagerstelle 4 umfassen.

### Bezugszeichenliste:

- 1: Steuerung
- 2: Fahrzeug
- 3: Kranarm
- 4: Lagerstelle
- 5: Lagerstelle
- 6: Hydraulikzylinder
- 7: Basis
- 8: Kransäule
- 9: Hubarm
- 10: Knickarm
- 11: Ausschub
- 12: Knickarm
- 13: Ausschub
- 14: Knickarm
- 15: Ausschub
- 16: Kran
- 17: Recheneinheit
- 18: Speichereinheit
- 19: Benutzerschnittstelle
- 20: Funkfernsteuerung
- 21: Anzeige

- P1, P2, P3, P4, P5: Drucksensoren
- p21, p22, p23: Hydraulikdruck
- p41, p42, p43: Hydraulikdruck
- S1, S2: Schubstellungssensoren
- X12, x22, x23: Schubstellung
- K1, K2, K3, K4: Winkelsensoren
- φ: Schwenkwinkel
- θ: Knickwinkel
- θ21, θ22, θ23: Knickwinkelstellung
- v1: Schwenkachse
- L: Längserstreckung
- t: Zeit
- S: Schwellwert
- Δp42: Druckzunahme
- µ: Reibwert

## Patentansprüche

1. Verfahren zur Bestimmung einer Lagerreibung in einem Armsystem eines Kranarms (3) mit zumindest einem ersten Kranarm (9, 10) und einem zweiten Kranarm (10, 11), wobei der zweite Kranarm (10, 11) zumindest abschnittsweise in dem ersten Kranarm (10) über zumindest eine Lagerstelle (4) verschiebbar gelagert ist und/oder der zweite Kranarm (10) an dem ersten Kranarm (9) über zumindest eine Lagerstelle (5) gelenkig gelagert ist, und das Armsystem zumindest einen Antrieb (6) für den zumindest ersten und zweiten Kranarm (9, 10, 11) aufweist, wobei
- in einem ersten Erfassungs-Verfahrensschritt (i) eine Erfassung von zumindest einem ersten Wert, der für eine Lagerreibung der zumindest einen Lagerstelle (4, 5) bei einem ersten Aktivieren des zumindest einen Antriebs (6) des Armsystems zur Bewegung zumindest des zweiten Kranarms (10, 11) relativ zum ersten Kranarm (9, 10) charakteristisch ist, erfolgt,
- in einem Antriebs-Verfahrensschritt (ii) ein zweites Aktivieren des zumindest einen Antriebs (6) des Armsystems erfolgt, bei welchem eine Bewegung zumindest des zweiten Kranarms (10, 11) relativ zum ersten Kranarm (9, 10) erfolgt,
- in einem zweiten Erfassungs-Verfahrensschritt (iii) während der zweiten Aktivierung des zumindest einen Antriebs (6) eine Erfassung von zumindest einem zweiten Wert, der ein für eine Lagerreibung der zumindest einen Lagerstelle (4, 5) charakteristischer Messwert ist, erfolgt, und
- in einem Auswert-Verfahrensschritt (iv) durch eine Auswertung des zumindest einen ersten Werts und des zumindest einen während der zweiten Aktivierung des Antriebs (6) erfassten zweiten Werts eine Charakterisierung der Lagerreibung der zumindest einen Lagerstelle (4, 5) erfolgt.

2. Verfahren nach Anspruch 1, wobei im ersten Erfassungs-Verfahrensschritt (i)
- ein erstes Aktivieren des zumindest einen Antriebs (6) des Armsystems erfolgt, bei welcher eine Bewegung zumindest des zweiten Kranarms (10, 11) relativ zum ersten Kranarm (9, 10) erfolgt, und im ersten Erfassungs-Verfahrensschritt (i) während der ersten Aktivierung des Antriebs (6) eine Erfassung des zumindest einen ersten Werts in Form von zumindest einem für eine Lagerreibung der zumindest einen Lagerstelle (4, 5) charakteristischen Messwerts erfolgt, und/oder
- eine Erfassung des zumindest einen ersten Werts in Form zumindest eines aus einer Simulation gewonnenen Werts erfolgt, und/oder
- eine Erfassung des zumindest einen ersten Werts in Form zumindest eines empirisch gewonnenen Werts erfolgt, und/oder
- eine Erfassung des zumindest einen ersten Werts in Form eines nominellen Werts erfolgt

3. Verfahren nach einem der beiden vorangehenden Ansprüche, wobei in einem Berechnungs-Verfahrensschritt (v) für den Auswert-Verfahrensschritt (iv) aus dem zumindest einen ersten und dem zumindest einen zweiten Wert zumindest eine erste und eine zweite Kennzahl der Lagerreibung, vorzugsweise zumindest ein erster und ein zweiter Reibwert (µ), errechnet wird.

4. Verfahren nach einem der vorangehenden Ansprüche, wobei sich der erste Wert auf eine erste Konfiguration der Kranarme (7, 8, 9, 10, 11) des Armsystems bezieht und sich die Kranarme (7, 8, 9, 10, 11) des Armsystems bei der Aktivierung des Antriebs (6) im Antriebs-Verfahrensschritt (ii) in einer zweiten Konfiguration befinden, und die erste und die zweite Konfiguration im Wesentlichen identisch sind oder sich unterscheiden.

5. Verfahren nach einem der vorangehenden Ansprüche, wobei die Bewegung der Kranarme (7, 8, 9, 10, 11) des Armsystems für eine erste Aktivierung des zumindest einen Antriebs und die Bewegung der Kranarme (7, 8, 9, 10, 11) des Armsystems im Antriebs-Verfahrensschritt (ii) im Wesentlichen identisch sind oder sich die Bewegungen unterscheiden.

6. Verfahren nach einem der vorangehenden Ansprüche, wobei im ersten und/oder im zweiten Erfassungs-Verfahrensschritt (i, iii)
- eine Erfassung einer Losbrechkraft und/oder eines Losbrechmoments der zumindest einen Lagerstelle (4, 5) und/oder
- eine Erfassung zumindest eines Parameters des zumindest einen Antriebs (6) und/oder
- eine Erfassung einer Reibkraft der zumindest einen Lagerstelle (4, 5) und/oder
- eine Erfassung eines Hydraulikdrucks eines Hydraulikzylinders des Antriebs (6)
erfolgt.

7. Verfahren nach einem der vorangehenden Ansprüche, wobei in einem Vergleichs-Verfahrensschritt (vi) zur Bestimmung einer zeitlichen Entwicklung der Lagerreibung im Armsystem (7, 8, 9, 10, 11) des Kranarms ein zeitlicher Verlauf für die Auswertung des zumindest einen ersten und des zumindest einen zweiten Werts erstellt wird.

8. Verfahren nach dem vorangehenden Anspruch, wobei in einem Vergleichs-Verfahrensschritt (vi) eine zeitliche Änderung für die Auswertung des zumindest einen ersten und des zumindest einen zweiten Werts bestimmt wird.

9. Verfahren nach dem vorangehenden Anspruch, wobei ein Gradient der zeitlichen Änderung für die Auswertung des zumindest einen ersten und des zumindest einen zweiten Werts bestimmt wird.

10. Verfahren nach einem der Ansprüche 7 bis 9, wobei im Vergleichs-Verfahrensschritt (vi) ein Vergleich der Auswertung des zumindest einen ersten und des zumindest einen zweiten Werts mit einem vorgegebenen oder vorgebbaren Schwellwert (S) erfolgt.

11. Steuerung (1) mit einer Recheneinheit (17) für einen Kran (16) mit einem Kranarm (3), die zur Durchführung eines Verfahrens nach zumindest einem der Ansprüche 1 bis 10 zur Bestimmung einer Lagerreibung im Armsystem des Kranarms (3) ausgebildet ist, wobei von der Steuerung (1)
- in einem Antriebs-Betriebsmodus eine erste und eine zweite Aktivierung des zumindest einen Antriebs (6) des Armsystems, bei welcher jeweils eine Bewegung zumindest des zweiten Kranarms (10, 11) relativ zum ersten Kranarm (9, 10) erfolgt, durchführbar ist,
- in einem Erfassungs-Betriebsmodus während der ersten und der zweiten Aktivierung des Antriebs (6) eine Erfassung von zumindest einem ersten und zumindest einem zweiten Wert, der jeweils für eine Lagerreibung der zumindest einen Lagerstelle (4, 5) charakteristisch ist, durchführbar ist, und
- in einem Auswert-Betriebsmodus durch eine Auswertung des zumindest einen erfassten ersten Werts und des zumindest einen erfassten zweiten Werts eine Charakterisierung der Lagerreibung in dem Armsystem des Kranarms (3) durchführbar ist.

12. Steuerung (1) mit einer Recheneinheit (17) nach Anspruch 11 wobei eine Auswertung zu der im Auswert-Verfahrensschritt (iv) charakterisierten Lagerreibung im Armsystem des Kranarms (3) an einer mit der Recheneinheit (17) kommunizierenden Anzeige (21) anzeigbar ist.

13. Computerprogrammprodukt für eine Steuerung nach einem der Ansprüche 11 oder 12, umfassend Befehle, welche bei einer Ausführung durch die Recheneinheit (17) diese veranlassen, aus einer Speichereinheit (18), welche mit der Recheneinheit (17) in einer Datenverbindung steht oder in eine solche bringbar ist, ein Verfahren nach einem der Ansprüche 1 bis 10 ausführt.

14. Kran (16) - bevorzugt Ladekran für ein Fahrzeug (2), besonders bevorzugt Knickarmkran - mit einer Steuerung (1) mit einer Recheneinheit (17) nach einem der Ansprüche 11 oder 12.

## Claims

1. Method for determining a bearing friction in an arm system of a crane arm (3) having at least one first crane arm (9, 10) and one second crane arm (10, 11), wherein the second crane arm (10, 11) is mounted displaceably at least in some portions in the first crane arm (10) by means of at least one bearing point (4) and/or the second crane arm (10) is mounted in a hinged manner on the first crane arm (9) by means of at least one bearing point (5), and the arm system has at least one drive (6) for the at least first and second crane arm (9, 10, 11), wherein
- in a first acquisition method step (i), at least one first value is acquired, which is characteristic of a bearing friction of the at least one bearing point (4, 5) during a first activation of the at least one drive (6) of the arm system for moving at least the second crane arm (10, 11) relative to the first crane arm (9, 10),
- in a driving method step (ii), a second activation of the at least one drive (6) of the arm system is effected, in which at least the second crane arm (10, 11) is moved relative to the first crane arm (9, 10),
- in a second acquisition method step (iii), during the second activation of the at least one drive (6) at least one second value is acquired, which is a measured value that is characteristic of a bearing friction of the at least one bearing point (4, 5), and
- in an evaluation method step (iv), the bearing friction of the at least one bearing point (4, 5) is characterized through an evaluation of the at least one first value and the at least one second value, which is acquired during the second activation of the drive (6).

2. Method according to claim 1, wherein in the first acquisition method step (i)
- a first activation of the at least one drive (6) of the arm system is effected, in which at least the second crane arm (10, 11) is moved relative to the first crane arm (9, 10), and in the first acquisition method step (i), during the first activation of the drive (6), the at least one first value is acquired in the form of at least one measured value that is characteristic of a bearing friction of the at least one bearing point (4, 5), and/or
- the at least one first value is acquired in the form of at least one value obtained from a simulation, and/or
- the at least one first value is acquired in the form of at least one empirically obtained value, and/or
- the at least one first value is acquired in the form of a nominal value.

3. Method according to one of the two preceding claims, wherein in a calculation method step (v) for the evaluation method step (iv) at least one first and one second metric for the bearing friction, preferably at least one first and one second coefficient of friction (µ), is generated from the at least one first and the at least one second value.

4. Method according to one of the preceding claims, wherein the first value relates to a first configuration of the crane arms (7, 8, 9, 10, 11) of the arm system, and the crane arms (7, 8, 9, 10, 11) of the arm system are in a second configuration during the activation of the drive (6) in the driving method step (ii), and the first and the second configuration are substantially identical or are different.

5. Method according to one of the preceding claims, wherein the movement of the crane arms (7, 8, 9, 10, 11) of the arm system for a first activation of the at least one drive and the movement of the crane arms (7, 8, 9, 10, 11) of the arm system in the driving method step (ii) are substantially identical, or the movements are different.

6. Method according to one of the preceding claims, wherein in the first and/or the second acquisition method step (i, iii)
- a breakaway force and/or a breakaway torque of the at least one bearing point (4, 5) are acquired and/or
- at least one parameter of the at least one drive (6) is acquired and/or
- a friction force of the at least one bearing point (4, 5) is acquired and/or
- a hydraulic pressure of a hydraulic cylinder of the drive (6) is acquired.

7. Method according to one of the preceding claims, wherein in a comparison method step (vi), to determine an evolution of the bearing friction in the arm system (7, 8, 9, 10, 11) of the crane arm over time, a time curve is compiled for the evaluation of the at least one first and the at least one second value.

8. Method according to the preceding claim, wherein in a comparison method step (vi) a change in time is determined for the evaluation of the at least one first and the at least one second value.

9. Method according to the preceding claim, wherein a gradient of the change in time is determined for the evaluation of the at least one first and the at least one second value.

10. Method according to one of claims 7 to 9, wherein in the comparison method step (vi) the evaluation of the at least one first and the at least one second value is compared with a predetermined or predeterminable threshold value (S).

11. Controller (1) having an arithmetic unit (17) for a crane (16) having a crane arm (3), configured for carrying out a method according to at least one of claims 1 to 10 for determining a bearing friction in the arm system of the crane arm (3), wherein the controller (1)
- in a driving operating mode, can carry out a first and a second activation of the at least one drive (6) of the arm system, in each of which at least the second crane arm (10, 11) is moved relative to the first crane arm (9, 10),
- in an acquisition operating mode, can carry out an acquisition of at least one first and at least one second value, each of which is characteristic of a bearing friction of the at least one bearing point (4, 5), during the first and the second activation of the drive (6), and
- in an evaluation operating mode, can carry out a characterization of the bearing friction in the arm system of the crane arm (3) through an evaluation of the at least one acquired first value and the at least one acquired second value.

12. Controller (1) having an arithmetic unit (17) according to claim 11, wherein an evaluation in relation to the bearing friction, **characterized in** the evaluation method step (iv), in the arm system of the crane arm (3) can be displayed on a display (21) that communicates with the arithmetic unit (17).

13. Computer program product for a controller according to one of the claims 11 or 12, comprising commands which, when executed by an arithmetic unit (17), cause said arithmetic unit to perform a method according to one of claims 1 to 10 from a storage unit (18) that has or can have a data connection to the arithmetic unit (17).

14. Crane (16) - preferably a cargo crane for a vehicle (2), particularly preferably a knuckle boom crane - having a controller (1) having an arithmetic unit (17) according to one of the claims 11 or 12.

## Revendications

1. Procédé de détermination d'un frottement de palier dans un système de bras d'un bras de grue (3) avec au moins un premier bras de grue (9, 10) et un deuxième bras de grue (10, 11), dans lequel le deuxième bras de grue (10, 11) est monté de manière à pouvoir coulisser par l'intermédiaire d'au moins un point de palier (4) au moins par sections dans le premier bras de grue (10) et/ou le deuxième bras de grue (10) est monté de manière articulée par l'intermédiaire d'au moins un emplacement de palier (5) sur le premier bras de grue (9), et le système de bras présente au moins un entraînement (6) pour l'au moins premier et l'au moins un deuxième bras de grue (9, 10, 11), dans lequel
- dans une première étape de procédé de détection (i), une détection d'au moins une première valeur qui est caractéristique d'un frottement de palier de l'au moins un emplacement de palier (4, 5) lors d'une première activation de l'au moins un entraînement (6) du système de bras pour déplacer au moins le deuxième bras de grue (10, 11) par rapport au premier bras de grue (9, 10), est effectuée,
- dans une étape de procédé d'entraînement (ii), une deuxième activation de l'au moins un entraînement (6) du système de bras est effectuée, lors de laquelle un mouvement au moins du deuxième bras de grue (10, 11) est effectué par rapport au premier bras de grue (9, 10),
- dans une deuxième étape de procédé de détection (iii) lors de la deuxième activation de l'au moins un entraînement (6), une détection d'au moins une deuxième valeur, qui est une valeur de mesure caractéristique d'un frottement de palier de l'au moins un emplacement de palier (4, 5), est effectuée, et
- dans une étape de procédé d'évaluation (iv), une caractérisation du frottement de palier de l'au moins un emplacement de palier (4, 5) est effectuée par une évaluation de l'au moins une première valeur et de l'au moins une deuxième valeur détectée pendant la deuxième activation de l'entraînement (6).

2. Procédé selon la revendication 1, dans lequel, dans la première étape de procédé de détection (i),
- une première activation de l'au moins un entraînement (6) du système de bras est effectuée, lors de laquelle un mouvement au moins du deuxième bras de grue (10, 11) est effectué par rapport au premier bras de grue (9, 10), et dans la première étape de procédé de détection (i) lors de la première activation de l'entraînement (6), une détection de l'au moins une première valeur sous la forme d'au moins une valeur de mesure caractéristique d'un frottement de palier de l'au moins un emplacement de palier (4, 5), est effectuée, et/ou
- une détection de l'au moins une première valeur sous la forme d'au moins une valeur obtenue à partir d'une simulation est effectuée, et/ou
- une détection de l'au moins une première valeur sous la forme d'au moins une valeur obtenue empiriquement est effectuée, et/ou
- une détection de l'au moins une première valeur sous la forme d'une valeur nominale est effectuée.

3. Procédé selon l'une quelconque des deux revendications précédentes, dans lequel, dans une étape de procédé de calcul (v) pour l'étape de procédé d'évaluation (iv) à partir de l'au moins une première et de l'au moins une deuxième valeur, sont calculés au moins un premier et un deuxième indice du frottement de palier, de préférence au moins un premier et un deuxième coefficient de frottement (p).

4. Procédé selon l'une quelconque des revendications précédentes, dans lequel la première valeur se rapporte à une première configuration des bras de grue (7, 8, 9, 10, 11) du système de bras et les bras de grue (7, 8, 9, 10, 11) du système de bras se trouvent lors de l'activation de l'entraînement (6) dans l'étape de procédé d'entraînement (ii) dans une deuxième configuration et la première et la deuxième configuration sont sensiblement identiques ou différentes.

5. Procédé selon l'une quelconque des revendications précédentes, dans lequel le mouvement des bras de grue (7, 8, 9, 10, 11) du système de bras pour une première activation de l'au moins un entraînement et le mouvement des bras de grue (7, 8, 9, 10, 11) du système de bras dans l'étape de procédé d'entraînement (ii) sont sensiblement identiques ou les mouvements sont différents.

6. Procédé selon l'une quelconque des revendications précédentes, dans lequel, dans la première et/ou la deuxième étape de procédé de détection (i, iii),
- une détection d'une force de décollement et/ou d'un couple de décollement de l'au moins un emplacement de palier (4, 5) et/ou
- une détection au moins d'un paramètre de l'au moins un entraînement (6) et/ou
- une détection d'une force de frottement de l'au moins un emplacement de palier (4, 5) et/ou
- une détection d'une pression hydraulique d'un vérin hydraulique de l'entraînement (6) sont effectuées.

7. Procédé selon l'une quelconque des revendications précédentes, dans lequel, dans une étape de procédé de comparaison (vi) pour déterminer une progression dans le temps du frottement de palier dans le système de bras (7, 8, 9, 10, 11) du bras de grue, une évolution dans le temps est créée pour l'évaluation de l'au moins une première valeur et de l'au moins une deuxième valeur.

8. Procédé selon la revendication précédente, dans lequel, dans une étape de procédé de comparaison (vi), une modification temporelle pour l'évaluation de l'au moins une première valeur et de l'au moins une deuxième valeur est déterminée.

9. Procédé selon la revendication précédente, dans lequel un gradient de la modification temporelle est déterminé pour l'évaluation de l'au moins une première valeur et de l'au moins une deuxième valeur.

10. Procédé selon l'une quelconque des revendications 7 à 9, dans lequel, dans l'étape de procédé de comparaison (vi), une comparaison de l'évaluation de l'au moins une première valeur et de l'au moins une deuxième valeur à une valeur de seuil (S) spécifiée ou pouvant être spécifiée est effectuée.

11. Commande (1) avec une unité de calcul (17) pour une grue (16) avec un bras de grue (3), qui est réalisée pour mettre en œuvre un procédé selon au moins l'une quelconque des revendications 1 à 10 pour déterminer un frottement de palier dans le système de bras du bras de grue (3), dans laquelle la commande (1)
- peut mettre en œuvre, dans un mode de fonctionnement d'entraînement, une première et une deuxième activation de l'au moins un entraînement (6) du système de bras, dans laquelle un mouvement au moins du deuxième bras de grue (10, 11) par rapport au premier bras de grue (9, 10) est respectivement effectué,
- peut mettre en œuvre, dans un mode de fonctionnement de détection pendant la première et la deuxième activation de l'entraînement (6), une détection au moins d'une première et au moins d'une deuxième valeur, qui est respectivement caractéristique d'un frottement de palier de l'au moins un emplacement de palier (4, 5), et
- peut mettre en œuvre, dans un mode de fonctionnement d'évaluation, une caractérisation du frottement de palier dans le système de bras du bras de grue (3) par une évaluation de l'au moins une première valeur détectée et de l'au moins une deuxième valeur détectée.

12. Commande (1) avec une unité de calcul (17) selon la revendication 11 dans laquelle une évaluation relative au frottement de palier caractérisé dans l'étape de procédé d'évaluation (iv) dans le système de bras du bras de grue (3) peut être affichée sur un affichage (21) communiquant avec l'unité de calcul (17).

13. Produit-programme d'ordinateur pour une commande selon l'une quelconque des revendications 11 ou 12, comprenant des instructions, qui, lors d'une exécution par l'unité de calcul (17), amènent celle-ci, à partir d'une unité de stockage (18), qui se trouve dans une liaison de données avec l'unité de calcul (17) ou qui peut être amenée dans une telle liaison, à exécuter un procédé selon l'une quelconque des revendications 1 à 10.

14. Grue (16) - de manière préférée grue de chargement pour un véhicule (2), de manière particulièrement préférée grue à bras articulé - avec une commande (1) avec une unité de calcul (17) selon l'une quelconque des revendications 11 ou 12.
